# EUROPEAN PATENT SPECIFICATION

(11) **EP 3 375 525 B1**
(45) Date of publication and mention of the grant of the patent: **03.01.2024**
(21) Application number: 18161980.0
(22) Date of filing: 15.03.2018
(51) Int. Cl.: C02F 101/32, B03D 1/14, B01D 17/02, B03D 1/24, C02F 1/24, B01D 1/00, B01D 21/02, B01D 21/24, C02F 103/10, B01D 21/00

(54) **MULTISTAGE COMPACT FLOTATION UNIT**
MEHRSTUFIGE KOMPAKTE FLOTATIONSEINHEIT
UNITÉ DE FLOTTATION COMPACTE À PLUSIEURS ÉTAGES

(30) Priority: 16.03.2017 NO 20170389
(43) Date of publication of application: 19.09.2018
(73) Proprietor: Grant Prideco, Inc., Wilmington, DE 19801 (US)
(72) Inventor: NEWTON, Tim, Camberley, GU17 0JU (GB); VANJO-CARNELL, James, Camberley, Surrey GU15 1JA (GB)
(74) Representative: Onsagers AS

(56) References cited:
- WO-A1-86/05412
- DE-B- 1 157 105
- US-A1- 2004 232 053

## Description

The present invention relates to a compact flotation unit (CFU). Especially the present invention relates to a compact flotation unit comprising a cylindrical vertical tank with an upper compartment, a lower compartment and at least one barrier element, wherein the tank in the upper compartment comprises at least one tangential feed inlet and a first reject outlet, wherein the tank in the lower compartment comprises a second reject outlet and a cleaned fluid outlet.

### Background

During recovery of crude oil and gas from oil and/or gas wells water is often also recovered. Such water is generally referred to as "produced water", and the produced water is separated from the desired hydrocarbons by the use of different separation techniques. To further separate a remaining small amount of hydrocarbons, normally oil, from the produced water and thereby making the water applicable for reuse or release to the environment it is well known to use flotation techniques wherein gas is mixed with the produced water where the gas "adheres" to the hydrocarbons and thereby assist the separation thereof in a cyclone. The amount of hydrocarbon present in the water is typically from 50-150 mg oil per litre water.

### Prior art

In a compact flotation unit gas is mixed with a fluid comprising hydrocarbons and a reject comprising gas and hydrocarbons is separated from the remaining fluid.

DE 1157105 B discloses a separator for separating water and oil comprising a cylindrical vertical tank having a chamber for coarse separation of the fluid which enters a second coarse separation chamber through a tangential fluid inlet. The second chamber comprises a reject outlet in the upper compartment of the tank. The lower compartment of the tank comprises a cleaned fluid outlet channel guiding the fluid from the lower compartment out through the top of the tank. The outlet in the lower compartment serves to remove mud from the separator. The upper compartment and the lower compartment of the separator are in fluid communication via a spiral shaped channel serving as a separation compartment.

WO 86/05412 A1 discloses a separator for separating water and oil. The separator comprises a ring-shaped upper chamber which receives the fluid to be cleaned from a tangential inlet. The fluid is thereafter forced into spiral shaped channels wherein the light and heavy particles are separated and the heavy particles (water) are exiting through an outlet and the light particles (oil) are forced into the chamber and thereafter exiting through the channel. Further, a heavy sand/slush outlet is arranged extending upwards from the bottom to the top of the separator.

US 2004/232053 A1 discloses a flotation unit for paper pulp de-inking. The flotation unit has a tangential main inlet wherein the pulp enters the unit. The pulp is passed within a spiral shaped channel wherein the pulp is separated allowing light bubbles to rise upwards within the channel through bubble passageways and allowing the remaining pulp to be guided to the bottom of the unit and evacuated through a main outlet extending from the bottom to the top of the unit.

US 8,741,032B2 discloses a separator tank for separating oil and gas from water comprising a plurality of tank units arranged on top of one another. Water treated in the upper unit is transferred via an intermediate pipe to the unit below. Means for calming the stream around the inlet to the intermediate pipe are installed.

WO 2013/109345 discloses an apparatus for separation of hydrocarbons from hydrocarbon-containing produced water. The apparatus comprises spiral shaped guide vanes leading the produced water entering the apparatus into an upward spiralling motion. The apparatus comprises a plate separating the apparatus into compartments. The plate comprises openings near a central axis allowing for fluid flow between adjacent compartments.

EP 1782870 A1 discloses a separator tank for separating oil and gas from water comprising a tank with a vortex zone 7 below the inlet 3 of the tank and above the water outlet 5. The separator tank comprises means for gas injection. The gas may be injected into the fluid in the tank via one or more nozzles provided in the upper part and/or lower part of the tank.

The vortex zone comprises a downward protruding conical frusta shaped wall 8 dividing the tank into an upper part 9 and a lower part 10 with an opening 11 at the lower end of said downward protruding conical frusta shaped wall 8 to allow communication between the upper part 9 and the lower part 10 of the tank. Where the design of the vortex zone comprising the protruding conical frusta wall with a helical spiraling vane co-operating with the tangentially arranged inlet promotes formation of a vortex flow in the separator tank, which provides for separation of the oil and the gas phase from the water phase inside the protruding conical frusta shaped wall 8 that divides the tank. Within the vortex zone oil and gas are separated from the water, and the gas and oil are continuously released from the mixture through the outlet 4 at the upper part of the tank. Further, a guiding plate 13 is needed to provide a vortex flow in the lower part 10 of the tank. Since the vortex zone has an open conical shape, the gas to be separated from the fluid has a high risk of being trapped by the fluid/water when passing through the vortex zone instead of being separated out through outlet 4 via opening 11, thus, the separator tank does not provide an optimal separation without the installation of the guiding plate 13.

### Objectives of the invention

The present invention aims at providing a compact flotation unit with more than one compartments wherein a large part of the helical velocity of a fluid to be separated is maintained or increased when being transferred from one compartment to the next compartment.

A further objective is to provide a flotation unit that allows for the use of a larger amount of gas without increasing the overall size. Further the invention aims at providing for increased mixing of the fluid to be separated and the added gas. It is also an aim of the present invention to provide a separation unit which allows for increased separation by increased fluid velocity in a cyclone section.

The present invention aims at providing a compact flotation unit for separating hydrocarbons from water. In one aspect improved separation is obtained by introducing gas to the feed stream comprising the fluid to be separated. The gas can be natural gas or other hydrocarbon gas if hydrocarbons are to be separated out from water. However, also other types of gas such as nitrogen, air, carbon dioxide etc. are also applicable depending on the separation to be performed and environment to be performed within.

The present invention provides a compact flotation unit comprising an essential cylindrical vertical tank with an upper compartment, a lower compartment and at least one barrier element, wherein the tank in the upper compartment comprises at least one tangential feed inlet and a first reject outlet, wherein the tank in the lower compartment comprises a second reject outlet and a cleaned fluid outlet wherein the at least one barrier element comprises a downward spiral shaped channel with a channel inlet opening in the upper compartment, and a channel outlet opening in the lower compartment, wherein the downward spiral shaped channel provides for fluid communication between the upper compartment and the lower compartment.

In one aspect of the present invention, the compact flotation unit comprises only one barrier element, and all the fluid entering the barrier element from the channel inlet opening in the upper compartment is guided into the lower compartment.

In another aspect, wherein the compact flotation unit comprises a plurality of barrier elements, all the fluid entering each barrier element will be guided therethrough.

In a further aspect of the compact flotation unit the downward spiral shaped channel is the only fluid passage from the upper compartment to the lower compartment. Accordingly, all fluid cleaned in the upper compartment will flow through the channel and enter the lower compartment at the channel outlet. Within the lower compartment the fluid is exposed to further separation.

In a further aspect the first reject outlet may be in fluid connection to a first control valve, and the second reject outlet may be in fluid connection to a second control valve, where the first control valve and second control valve control the helical flow velocity of the fluid flowing through the downward spiral shaped channel.

The downward spiral shaped channel comprises at least one channel gas inlet for mixing gas into a fluid passing from the upper compartment to the lower compartment of the tank. Here the gas is added in a confined space, where no separation takes place which is believed to have the effect to enhance the contact between the gas and the compounds to be separated from the fluid. The at least one channel gas inlet is arranged to inject gas co-currently with a fluid travelling downward the downward spiral shaped channel, thereby the velocity of the gas adds to the velocity of the combined stream. This may cause the helical velocity of the fluid to be increased. Higher velocity of the fluid to be separated when entering the lower compartment provides improved helical effect in the lower compartment and thereby improved separation of the light gas bobbles with adhered compounds to be removed from the remaining cleaned fluid.

In a further aspect the at least one channel gas inlet has a body part inside the channel that spans the radial width of the downward spiral shaped channel, thereby the body part blocks part of the cross-sectional area of the channel which will locally increase the velocity of the fluid in that section of the channel. In addition to that this increased velocity improves the mixing, as turbulence increases with the velocity (ref. Reynold number) and thus enhances the flotation process through improved bubble-droplet contact. Further by the law of Bernoulli, a locally increased velocity will also cause a local pressure drop of the fluid passing from the upper compartment to the lower compartment of the tank, believed to further improve mixing gas into a fluid passing from the upper compartment to the lower compartment of the tank. The elongated design spanning the radial width of the channel also provides a spanned distribution of the gas mixed into the fluid passing from the upper compartment to the lower compartment in a downward spiral shaped channel. This again provides for a more uniformed mixing of the gas passing from the upper compartment to the lower compartment of the tank.

In one aspect the at least one channel gas inlet is an array of gas nozzles or an elongated slot, this can be included in the body part spanning the radial with so that the gas can be introduced over the radial width of the channel.

The inside body part of the at least one channel gas inlet is in one aspect of the invention essentially round or oval shaped, such that a fluid passing downward the spiral channel is guided smoothly into a passage along the at least one channel gas inlet. The smooth transitions on both the upstream and downstream side reduce the pressure loss and combined with the gas inlet and optionally a mixer element explained below will provide an effect resembling an ejector.

In a further aspect of the invention the ratio of the maximum cross-sectional area of the at least one channel gas inlet over the cross-sectional area of the downward spiral shaped channel at the same position is between 0.10 and 0.8, or preferably between 0.20 and 0.6, or between 0.22 and 0.26. At these dimensions the above-mentioned effects are believed to be increased.

In a further aspect the ratio of axial height of downward spiral shaped channel blocked by the at least one channel gas inlet over the maximum axial height of the downward spiral shaped channel is between 0.10 and 0.8, or preferably between 0.20 and 0.6, or between 0.22 and 0.26.

According to another aspect of the present invention the downward spiral shaped channel further comprises at least one mixing element arranged downstream the at least one channel gas inlet. The mixing element is arranged to improve the mixing of gas added through the channel gas inlet and the fluid to be treated. The mixer element may be arranged downstream the channel gas inlet such that gas leaving the inlet will collide with the mixer element and thereby be redirected and mixed into the fluid stream. In on aspect the at least one mixing element comprises a curved upstream surface. In a further aspect the at least one mixing element comprises at least one corrugated edge. The corrugated edge is preferably arranged at the downstream side of the mixer element at is believed to improve the mixing of the fluid by influencing the flow pattern of the fluid travelling past it.

In one aspect of the invention the ratio of the maximum cross-sectional area of the at least one mixing element over the maximum cross-sectional area of the at least one channel gas inlet is in the range of 0.4-1, preferably in the range of 0.5-0.7, and more preferably in the range of 0.55-0.6.

In yet another aspect of the present invention there is a gap between the upstream end of the at least one mixer element and a downstream end of the at least one channel gas inlet, wherein said gap is in the range of the 0.1-2 times the maximum axial height of the at least one mixer element, preferably in the range of 0.4-0.9 times the maximum axial height of the mixer element, and more preferably in the range of 0.5-0.8 times the maximum axial height of the mixer element.

In a further aspect of the compact flotation unit the downward spiral shaped channel comprises one or more further gas inlet(s) arranged downstream the at least one channel gas inlet and arranged to inject gas co-currently with a fluid travelling downward the downward spiral shaped channel. These further gas inlets may introduce gas at a high velocity, thereby increasing the velocity of the fluid, and thereby increasing the cyclone effect in the lower compartment.

In one aspect the compact flotation unit within the downward spiral shaped channel further comprises a divider plate and two outlets arranged opposite each other. By dividing the flow into two streams and entering these in the lower compart with and angle of 180° the fluid is more equally distributed and this may lead to improved cyclone action in the lower compartment. A person skilled in the art will understand that additional divider plates can be introduced to further split and distribute the flow.

In a further aspect the radial width of the downward spiral shaped channel is in the range of 0.05-0.3 times the diameter of the tank, preferably 0.1-0.2 times the diameter of the tank, and more preferably 0.14-0.15 times the diameter of the tank. The channel is in one aspect arranged along the inner wall of the tank.

In yet another aspect the downward spiral shaped channel has a variable slope angle. A bottom wall of the spiral shaped channel at the channel outlet opening has in one aspect a helical slope angle in the range of 1-15 degrees, preferably 1-10 degrees, and more preferably 1.5-4 degrees. Whereas a bottom wall of the downward spiral channel at the channel inlet opening has a helical slope angle in the range of 10-80 degrees, preferably 25-65 degrees, more preferably 40-55 degrees. At the inlet the angle is steeper then at the outlet. The channel inlet opening is adapted to receive a helical flow and direct the flow into the channel whereas the channel outlet opening is arranged to provide a tangential flow in the lower compartment. Thus, both the channel inlet opening and the channel outlet opening are configured such that a large part of helical velocity of the fluid is maintained when traveling through the spiral shaped channel.

In another aspect the barrier element comprises a central cylinder forming an inner wall of the downward spiral shaped channel, wherein the upper end of the central cylinder is blocked by a blocking element. In a further aspect the blocking element extends upwards above the channel inlet opening.

In one aspect the lower end of the central cylinder is closed by a closure element having an opening comprising the second reject outlet which preferably is arranged in the centre of the closure element.

The blocking element comprises in one aspect an opening in fluid communication with a second reject conduit such that a second reject stream can pass from the lower compartment through the second reject outlet, through the central cylinder, and through the second reject conduit to the outside of the tank.

The essential cylindrical vertical tank may comprise more than one barrier element. When more barrier elements are included, the tank is divided into an upper compartment, a lower compartment and one or more intermediate compartments in-between two barrier elements.

In another aspect the essential cylindrical vertical tank comprises below the feed inlet(s) a first fluid diverter strip adjacent to a circumference of an inner wall of the tank and arranged to change the flow direction of a fluid film travelling down the inner wall by changing the vertical velocity component to a horizontal velocity component. The fluid diverter strip may have a C-shaped cross section with one leg pointing upward and arranged along the wall of the tank and the leg directed towards the centre of the tank.

In a further aspect the essential cylindrical vertical tank below the one or more barrier elements comprises a second fluid diverter strip adjacent to a circumference of the inner wall of the tank and arranged to change the flow direction of a fluid film travelling down the inner wall by changing the vertical velocity component to a horizontal velocity component. The second fluid diverter strip may have the same configuration as the first fluid diverter strip.

In yet another aspect the compact flotation unit comprises at least one feed gas inlet in connection with each feed inlet, such that gas is mixed with the feed before the feed enters the cylindrical vertical tank or in the upper compartment of the cylindrical vertical tank.

In a further aspect the cylindrical vertical tank comprises two tangential feed inlets arranged opposite each other at the same axial height. This arrangement is believed to improve the cyclone effect in the inlet zone due to an improve distribution of the feed flows.

In a further aspect the centre area of the inlet channel opening of the barrier element is offset a vertical centre axis of the cylindrical vertical tank. The term "offset" as used herein should be understood as a position anywhere between the inner wall of the tank and adjacent to the vertical centre axis of the tank.

The downward spiral shaped channel has the effect that a large part of the helical velocity of the fluid within the upper compartment is maintained when guided downwards towards the lower compartment, i.e. the downward spiral shaped channel conserves high rotational energy when guided from the first compartment to the second compartment.

Having a helical velocity offset from the centre of the tank, from the first compartment to the second compartment, provides an improvement in how the rotational energy is conserved from the first compartment to the second compartment.

The spiral shaped channel is an intermediate state where no removal of reject in the form of gas and hydrocarbons takes place, i.e. all the fluid entering the channel inlet opening in the upper compartment is guided into the lower compartment.

The term "curved upstream surface" as used herein connection with both the channel gas inlet and the mixer element and refers to a curved or u-shaped configuration of these elements such that the downward travelling fluid stream is smoothly diverged into the passage(s) around the channel gas inlet and the mixer element. In the passage(s) the helical velocity of the fluid stream will be increased due to the reduced cross-sectional area of the channel when passing the channel gas inlet or the mixer element. The curved surface reduces drag.

In a preferred embodiment the gas channel inlet and the mixer element arranged downstream thereof provides an injector like configuration. The upstream curved surface is combined with the increase in helical velocity of the fluid stream when passing along the channel gas inlet, the channel gas inlet comprises a nozzle or slit releasing gas co-currently at a position where the cross-sectional area of the channel is no longer reduced by the channel gas inlet. Downstream the nozzle or slit the helical velocity is increased again when the fluid stream is smoothly divided by the curved upstream surface of the mixer element, which reduces the cross-sectional area of the channel.

The corrugated downstream edge of the mixer element provides for increased mixing of the gas into the fluid. The helical velocity is reduced after the fluid stream has past the downstream end of the mixer element.

The term "maximum cross-sectional area" as used here in relation to the spiral channel refers to the maximum flow blocking area of the relevant element.

The term "a large part of the helical velocity is maintained or increased" as used herein should be understood to mean that between 70% and 100% of the kinetic helical velocity is maintained or increased, more preferably between 80 and 100%, or even more preferably between 90 and 100%, for example 95%.

The term "opposite" as used here, when referring to positions along a circular/cylindrical wall, refers to positions 180° away from each other based on the rotation about a centre/central axis of the circular/cylindrical wall.

### Brief description of the drawings

The present invention will be described in further detail with reference to the enclosed figures wherein
Figure 1 schematically illustrates a perspective view of a compact flotation unit where the tank and other elements are drawn as translucent for illustrative purposes.
Figure 2a shows an upper section of an embodiment of a flotation unit according to the invention, where a section of the cylindrical tank has been removed to illustrate the interior.
Figure 2b shows an alternative embodiment of an upper section of a flotation unit according to the invention, where a section of the cylindrical tank has been removed to illustrate the interior.
Figure 3 illustrates a perspective view from below of a barrier element.
Figure 4 illustrates an embodiment of a first channel gas inlet and a mixing element.
Figure 5a and 5b illustrate schematically a flotation unit according to the invention as cross-sectional side view and cross sectional top view respectively.
Figure 6 illustrates schematically a cross sectional side view of another embodiment of the CFU.
Figure 7 schematically illustrates a cross sectional side view of a further embodiment of the CFU.
Figure 8a and 8b illustrate schematically a flotation unit according to the invention as cross-sectional side view and cross sectional top view respectively.
Figure 9 schematically illustrates an embodiment of the channel gas inlet and the mixer element.
Figure 10 schematically illustrates another embodiment of the channel gas inlet and the mixer element.
Figure 11 is a schematically illustration of a cross sectional top view of the barrier element and the tank.
Figure 12 is a schematically illustration of a cross sectional top view of an alternative embodiment the barrier element and the tank.
Figure 13 illustrates schematically a CFU with four barrier elements arranged in series.
Figure 14 illustrates schematically a cross sectional side view of a further embodiment of the CFU.
Figure 15 illustrates schematically a cross sectional side view of a further embodiment of the CFU with four barrier elements arranged in series.

### Detailed description of the invention

In the figures the same reference number is used for the same elements in the different embodiments.

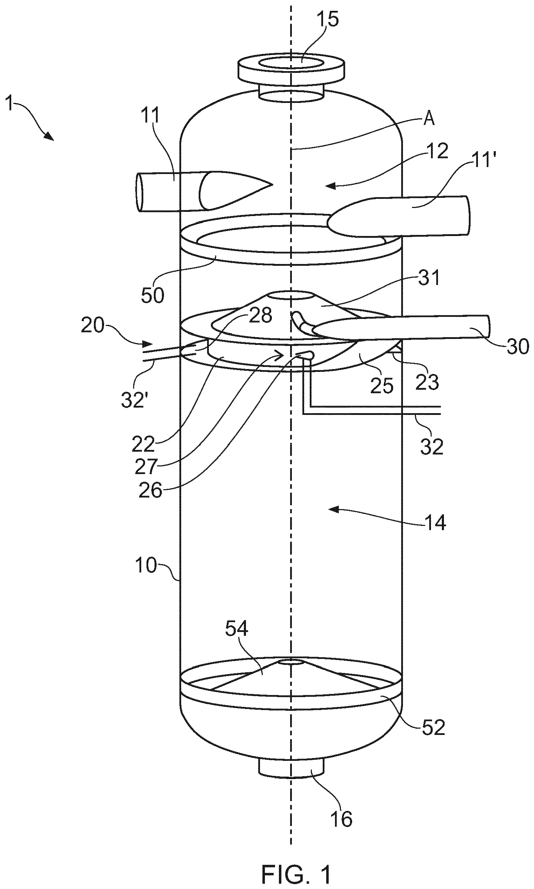

Figure 1 illustrates an embodiment of a compact flotation unit 1 comprising an essential cylindrical vertical tank 10, upper compartment 12, a lower compartment 14 and a barrier element 20 separating the upper compartment 12 from the lower compartment 14. In the upper compartment a first tangential feed inlet 11 and a second tangential feed inlet 11' are arranged opposite each other. Gas can be added to the feed prior to entry into tank 10, or within the upper compartment 12 in proximity of the feed inlet 11, 11'. The upper compartment further comprises a first reject outlet 15 arranged centrally at the top of the tank 10.

The lower compartment 14 comprises cleaned fluid outlet 16 and a second reject outlet connected to a second reject conduit 30.

The line A illustrates the central axis of the cylindrical vertical tank, and the terms "axial" and "radial" are to be understood with respect to the central axis of the cylindrical vertical tank.

The barrier element 20 comprises a downward spiral shaped channel 22 with a channel inlet opening in the upper compartment 12 arranged behind the second reject conduit 30 and therefore not directly visible on figure 1. The bottom wall 25 of the channel inlet opening slopes from the inlet and downwards into the spiral shaped channel 22. The downward spiral shaped channel 22 comprises a channel outlet opening 23 in the lower compartment 14. The channel 22 allows for fluid to travel from the upper compartment 12 to the lower compartment 14 in a continuously downward helical motion.

The channel 22 including the channel inlet opening is arranged along the inner wall of the cylindrical tank 10 providing for transferring the fraction of the fluid with the highest density to the lower compartment 14.

In one embodiment the bottom wall of the channel 22 at the outlet opening 23 has a smaller slope angle than the slope angle of the bottom wall 25 at the inlet opening, providing for additional vertical helical velocity in the lower compartment 14.

Within the channel 22 a first channel gas inlet 26 is arranged. Gas can be supplied from channel gas conduit 32 and be introduced to the fluid stream co-currently as the fluid passes downward the helically shaped channel. The arrangement of the gas conduit 32 is not limited and can as illustrated be a pipe passing from the outside of the cylindrical tank 10 directly into the first channel gas inlet 26. The gas is introduced to the fluid in this intermediate state where no separation takes place. This allows for improved mixing of the gas into the fluid before the fluid enters the lower compartment 14 where the separation takes place. Downstream the first channel gas inlet 26 a mixing element 27 is arranged. Mixing element is arranged to provide for further mixing of the gas into the fluid within the channel. Further downstream the channel 22 a second channel gas inlet 28 is arranged. This second channel gas inlet 28 can introduce additional gas co-currently to the fluid stream to increase separation of hydrocarbons from the fluid. The additional gas added through the second channel gas inlet 28 may further be added with a higher velocity then the velocity of the fluid stream travelling down the channel, thereby adding velocity to the combined stream and thereby provide for increase helical motion or swirling motion in the lower compartment 14. The second channel gas inlet 28 is connected to a second gas conduit 32'.

The illustrated embodiment of the barrier element 20 comprises a blocking element 31 blocking the upper end of a central cylinder formed by the inner wall of the helical shaped channel 22. The blocking element 31 blocks fluid communication between the compartments 12,14 through the central cylinder. The second reject outlet is in fluid communication with the second reject conduit 30 through an opening in the blocking plate 31. A second reject stream can be collected within the central cylinder and removed therefrom through the second reject conduit.

In the upper compartment 12 a first fluid diverter strip 50 is arranged below the feed inlets 11,11'. In the lower compartment 14 a second fluid diverter strip 52 is arranged. The fluid diverter strips 50, 52 are arranged adjacent to a circumference of the inner wall of the tank 10 and are arranged to change the flow direction of a liquid film travelling down the inner wall by changing a vertical velocity component to a horizontal component. Fluid diverter strips are known from flash separators as disclosed in WO2012/059514 and has the effect of redirecting gas bubbles within the film travelling down the inner wall in the horizontal direction towards the centre of the tank from were they will move upwards towards the respective reject outlet.

The lower compartment 14 may further comprise a vortex breaker plate 54 here in the form of an upwards cone shaped plate 54. The plate 54 hinders the central vortex from entering the area directly above the cleaned fluid outlet 16. The conical shape further directs any gas bubbles into an upwards direction. The diameter of the plate 54 is smaller than the diameter of the tank providing an annular gap through which the cleaned fluid flows.

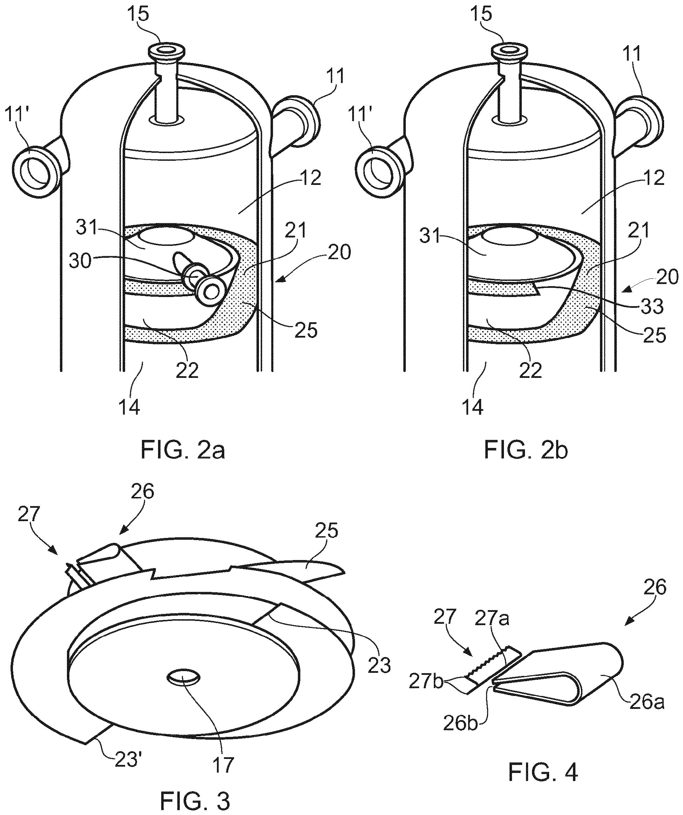

Figure 2a and 2b illustrate upper parts of a flotation unit; a section of the cylindrical tank is removed to illustrate the interior. The barrier element 20 comprises a channel inlet opening 21. Fluid is guided into the channel 22 by the bottom wall 25 of the channel 22 near the channel inlet opening 21. The only passage for the fluid from the upper compartment 12 to the lower compartment 14 is via the channel inlet opening 21 and the channel 22. In figure 2a the channel inlet opening 21 is placed on the upstream side of the pipe providing the second reject conduit 30. The tangential feed inlets 11, 11' provides a clockwise spin and the term "upstream" used here refers to the spinning direction. When the channel inlet opening 21 is arranged upstream the pipe providing the second reject conduit 30, the pipe will influence the flow and direct it into the channel inlet opening 21. Figure 2b illustrates an alternative solution wherein the channel inlet opening 21 is limited by a radial edge 33 in a plate element being a part of the bottom wall 25 that separates the channel 22 from the upper compartment 12, wherein the radial edge 33 will influence the flow and direct it into the channel inlet opening 21.

Figure 3 illustrates a perspective view from below of an embodiment of a barrier element. From this perspective the second reject outlet 17 is visible. In this embodiment the second reject outlet 17 is a central through hole in a plate shaped bottom surface of the barrier element.

Figure 4 is a close up view of an embodiment of a channel gas inlet 26 and a mixing element 27. The channel gas inlet 26 comprises an upstream curved surface 26a. Gas is intended to be supplied to a downwards spiral fluid stream from the slit 26b at the downstream end. The slit 26b is arranged to cross the radial distance of the channel but the slit may be angled compared to the radial distance. The cross-sectional area of the channel gas inlet 26 is reduced towards the downstream end thereof. The mixing element 27 is in the shape of a v-shaped plate with a curved upstream end 27a facing the slit of the channel gas inlet and two corrugated downstream ends 27b. The cross-sectional area of the mixing element accordingly increases towards the downstream ends 27b. This configuration of the cross-sectional area influences the velocity of a fluid stream flowing down the channel and combined with the inlet of gas the effect similarly to an ejector is obtained.

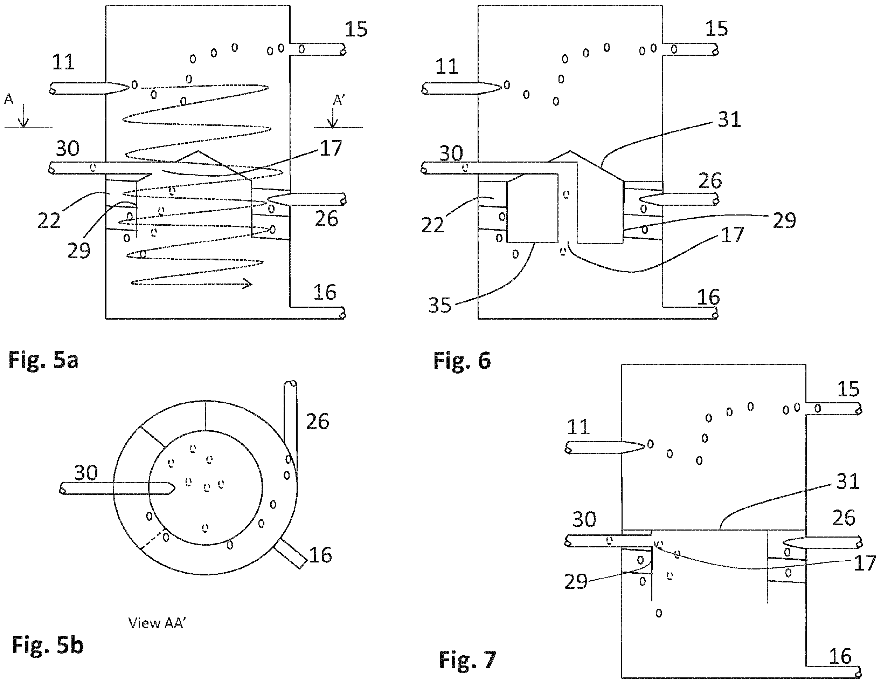

Figure 5a and 5b show respectively the cross section along the central axis and along the line AA' orthogonal to the axis of a CFU according to the invention. In this schematic view the fluid flow/stream from the tangential feed inlet 11 is illustrated as a dotted line. Gas bubbles included or introduced to the feed flow are illustrated as small ovals. A first reject stream comprising the bubbles and impurities such as hydrocarbons associated therewith leave the upper compartment through first reject outlet 15. The remaining fluid is travelling downwards in a helical pattern and enters the downward spiral shaped channel 22. The helical motion is maintained through the channel 22. Gas is introduced to the fluid through channel gas inlet 26. The fluid thereafter leaves the channel and enters the lower compartment. The helical velocity is maintained and the lighter gas bubbles will be collected in the center inside a central cylinder 29 and guided into the second reject outlet 17. A second reject conduit 30 is in fluid communication with the second reject outlet 17 at a top section of the central cylinder 29 allowing a second reject stream to be removed. The cleaned fluid leaves the CFU trough cleaned fluid outlet 16.

Figure 6 illustrates a cross sectional view similar to figure 5a but wherein the central cylinder 29 at the bottom is blocked by a closure element 35 with a central opening being the second reject outlet 17 leading into a conduit 30 guiding the second reject stream out of the CFU.

In figure 6 the blocking element 31, which blocks the fluid from flowing from the upper compartment and directly into the central cylinder 29, is conical. The conical shape may have a positive effect on the central gas vortex formed in the upper compartment. Further within the central cylinder 29 the conical blocking plate may as illustrated in figure 5a be used for collecting the second reject stream in the second reject outlet 17.

An alternative configuration is illustrated on figure 7. Here the blocking element 31 is a flat plate and the second reject outlet 17 is arranged in the top of the central cylinder 29.

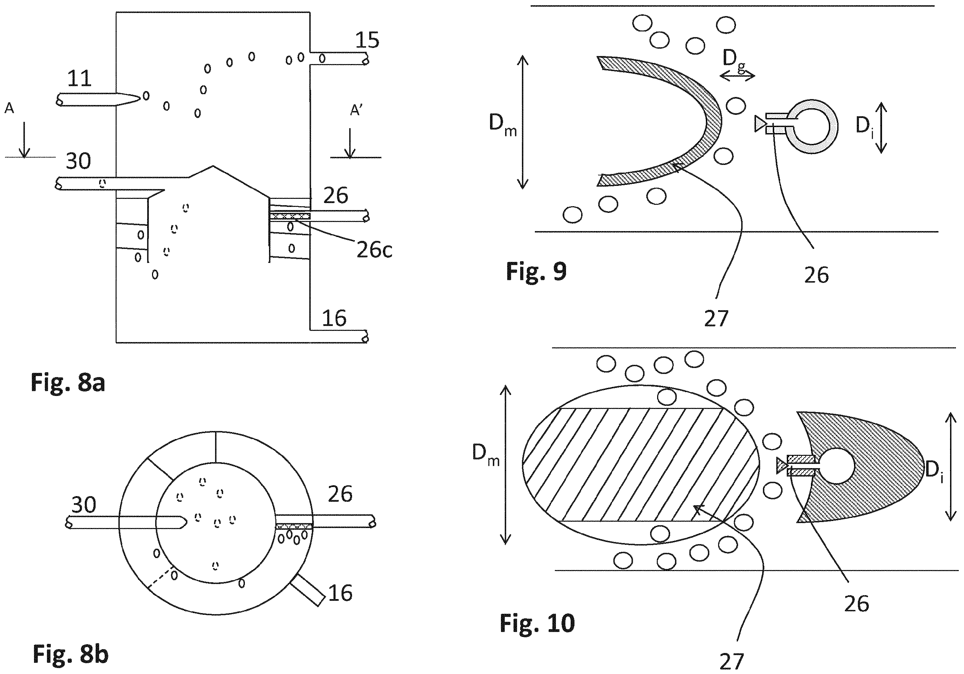

Figure 8a and 8b show respectively the cross section along the central axis and along the line AA' orthogonal to the axis of a CFU according to the invention. The figures illustrate an embodiment of the channel gas inlet 26 wherein the inlet comprises an inside body part 26c that spans the radial width of the downward spiral shaped channel. Gas can be released along the radial width of the downward spiral shaped channel from an array of nozzles or an elongated slot spanning the radial width of the inside body part 26c.

Figure 9 and 10 are schematic cross-sectional views of the channel section comprising the channel gas inlet 26 with an inside body part 26c and the mixer element 27. The intended fluid flow direction is from right to left. Figure 9 and 10 illustrate two different alternative configurations of these elements.

On figure 9 the channel gas inlet 26 is essential circular with a downstream slot or nozzle. Dᵢ is the maximum axial height of channel gas inlet 26. D_{g} is the length of the gap between the channel gas inlet 26 and the mixer element 27. Dₘ is the maximum axial height of the mixer element 27. The mixer element 27 has an upstream surface that is smoothly curved guiding the fluid and any added gas into the top and bottom passages past the mixer element 27. Due to the increasing axial height the fluid velocity is increased which results in improved mixing.

On figure 10 the inside body part of the channel gas inlet 26 has an essential oval shaped cross section on the upstream side thereof and an increased height Dᵢ. The increased height results in increased fluid velocity in the top and bottom passage along the channel gas inlet 26. The mixer element 27 also has an oval cross section and the maximum height Dₘ is larger than Dᵢ resulting in further increased velocity of the fluid when passing the mixer element 27.

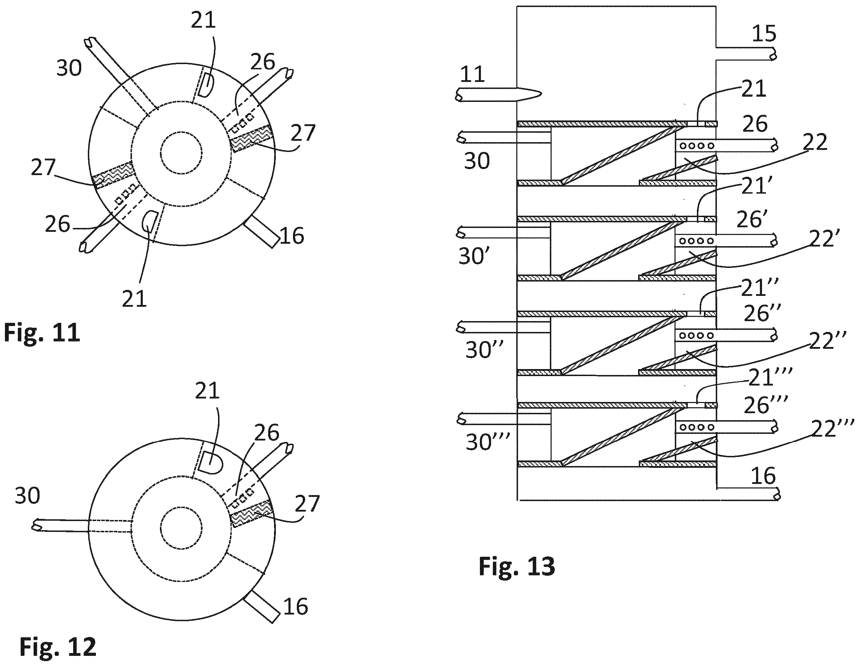

Figures 11 and 12 are cross sectional top views of embodiments of the barrier element. The barrier element on figure 11 comprises two opposite inlet openings 21 to the downward spiral shaped channel. Downstream each inlet opening 21 a channel gas inlet 26 and a mixer element 27 is arranged. The inlet openings 21 are arranged close to the wall of the tank.

The barrier element illustrated on figure 12 comprises only one channel inlet opening 21 and one channel gas inlet 26 and mixer element 27 arranged downstream thereof.

Figure 13 is a cross sectional view along the central axis of a CFU with four barrier elements arranged in series. Each barrier element comprises a spiral shaped channel 22, 22', 22", 22‴ with a inlet opening 21, 21', 21", 21‴ and a channel gas inlet 26, 26', 26", 26‴ respectively. Also, a second or further reject outlet 30, 30', 30", 30‴ respectively is in communication with the interior of each central cylinder. Fluid which after having past through the channel 22 and from which the second reject stream has been removed through outlet 30 enters the inlet opening 21' of the next barrier element. Gas is added from channel gas inlet 26'as the fluid follows through the spiral shaped channel 22'. After having left the channel 22' separation of a third reject stream 30' takes place in the intermediate compartment of the tank before the remaining fluid enters the third barrier element through inlet opening 21". The swirling motion of fluid travelling from inlet 11 to outlet 16 is maintained to a high degree through the all barrier elements and intermediate compartments.

As can be easily understood by a person skilled in the art the number of barrier element arranged within a vertical tank can be freely selected depending on the purity of the cleaned fluid leaving through outlet 16 that is desired.

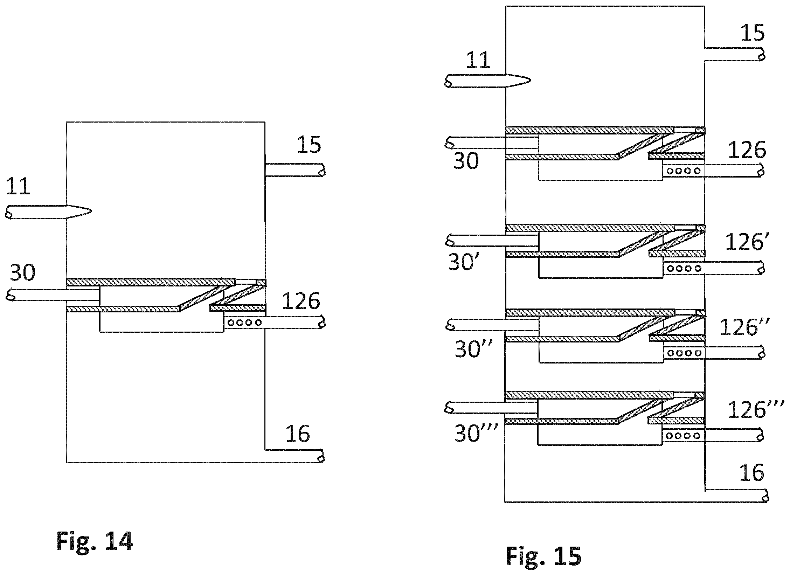

Figure 14 illustrate and alternative embodiment wherein gas is added through channel gas inlet 126 below the barrier element downstream the channel outlet opening. This embodiment preserves the rotational/helical velocity between the upper and lower compartment but does not utilise the additional effect of adding gas to the fluid flowing through the channel where no separation takes place.

Figure 15 is similar to figure 13 but with four barrier elements, according to figure 14, arranged in series with channel gas inlets below each of the barrier elements. The channel gas inlets to the intermediate compartments and lower compartment are referred to as 126, 126', 126", 126‴, respectively.

## Claims

1. Compact flotation unit for separating hydrocarbons from water, comprising an essential cylindrical vertical tank (1) with an upper compartment (12), a lower compartment (14) and at least one barrier element (20), wherein the tank (1) in the upper compartment (12) comprises at least one tangential feed inlet (11,11') and a first reject outlet(15), wherein the tank (1) in the lower compartment (14) comprises a second reject outlet (30) and a cleaned fluid outlet (16), wherein the at least one barrier element (20) comprises a downward spiral shaped channel (22) with a channel inlet opening (21) in the upper compartment (12), and a channel outlet opening (23) in the lower compartment (14), wherein the downward spiral shaped channel (22) provides for fluid communication between the upper compartment (12) and the lower compartment (14), and
**characterized in that**
the downward spiral shaped channel (22) comprises at least one channel gas inlet (26) for mixing gas into a fluid passing from the upper compartment (12) to the lower compartment (14) of the tank (1), and wherein the at least one channel gas inlet (26) is arranged to inject gas co-currently with a fluid stream travelling downward the downward spiral shaped channel (22) .

2. Compact flotation unit according to claim 1, wherein the downward spiral shaped channel (22) is the only fluid passage from the upper compartment (12) to the lower compartment (14).

3. Compact flotation unit according to claim 1, wherein the at least one channel gas inlet (26) has a body part (26c) inside the channel (22) that spans the radial width of the downward spiral shaped channel (22).

4. Compact flotation unit according to claims 1 or 3, wherein the at least one channel gas inlet (26) is an array of gas nozzles or an elongated slot.

5. Compact flotation unit according to claim 3, wherein the inside body part (26c) of the at least one channel gas inlet (26) is essentially round or oval shaped, such that a fluid passing downward the spiral channel (22) is guided smoothly into a passage along the at least one channel gas inlet (26).

6. Compact flotation unit according to claim 5, wherein the ratio of the maximum cross-sectional area of the at least one channel gas inlet (26) over the cross-sectional area of the downward spiral shaped channel (22) at the same position is between 0.10 and 0.8, or preferably between 0.20 and 0.6, or between 0.22 and 0 26

7. Compact flotation unit according to any one of the proceeding claims, wherein the downward spiral shaped channel (22) further comprises at least one mixing element (27) arranged downstream the at least one channel gas inlet (26).

8. Compact flotation unit according to claim 7, wherein the at least one mixing element (27) comprises a curved upstream surface.

9. Compact flotation unit according to claim 7 or 8, wherein the at least one mixing element (27) comprises at least one corrugated edge.

10. Compact flotation unit according to any one of the claims 7 to 9, wherein the ratio of the maximum cross-sectional area of the at least one mixing element (27) over the maximum cross-sectional area of the at least one channel gas inlet (26) is in the range of 0.4-1, preferably in the range of 0.5-0.7, and more preferably in the range of 0.55-0.6.

11. Compact flotation unit according to any one of the claims 7 to 10, wherein there is a gap between the upstream end of the at least one mixer element (27) and a downstream end of the at least one channel gas inlet (26), wherein said gap is in the range of the 0.1-2 times the maximum axial height of the at least one mixer element (27), preferably in the range of 0.4-0.9 times the maximum axial height of the mixer element (27), and more preferably in the range of 0.5-0.8 times the maximum axial height of the mixer element (27).

12. Compact flotation unit according to any one of the proceeding claims, wherein the downward spiral shaped channel (22) comprises one or more further gas inlet(s) (26', 26", 26‴) arranged downstream the at least one channel gas inlet (26) and arranged to inject gas co-currently with a fluid travelling downward the downward spiral shaped channel (22).

13. Compact flotation unit according to any one of the proceeding claims, wherein the downward spiral shaped channel (22) comprises a divider plate and two outlet openings (23) arranged opposite each other.

14. Compact flotation unit according to any one of the proceeding claims, wherein the radial width of the downward spiral shaped channel (22) is in the range of 0.05-0.3 times the diameter of the tank (1), preferably 0.1-0.2 times the diameter of the tank (1), and more preferably 0.14-0.15 times the diameter of the tank (1).

15. Compact flotation unit according to any one of the proceeding claims, wherein the downward spiral shaped channel (22) has a variable slope angle.

16. Compact flotation unit according to claim 14, wherein a bottom wall of the spiral shaped channel (22) at the channel outlet opening (23) has a helical slope angle in the range of 1-15 degrees, preferably 1-10 degrees, and more preferably 1.5-4 degrees.

17. Compact flotation unit according to claim 14 or 15, wherein a bottom wall (25) of the downward spiral channel (22) at the channel inlet opening (21) has a helical slope angle in the range of 10-80 degrees, preferably 25-65 degrees, more preferably 40-55 degrees.

18. Compact flotation unit according to any one of the proceeding claims, wherein the barrier element (20) comprises a central cylinder (29) forming an inner wall of the downward spiral shaped channel (22), wherein the upper end of the central cylinder (29) is blocked by a blocking element (31).

19. Compact flotation unit according to claim 18, wherein the blocking element (31) extends upwards above the channel inlet opening (21).

20. Compact flotation unit according to 18 or 19, wherein the lower end of the central cylinder (29) is closed by a closure element (35) wherein the second reject outlet (17) is arranged in the centre of the closure element (35).

21. Compact flotation unit according to any one of the claims 18 to 20, wherein the blocking element (31) comprises an opening in fluid communication with a second reject conduit (30) such that a second reject stream can pass from the lower compartment (14) through the second reject outlet (17), through the central cylinder (29), and through the second reject conduit (30) to the outside of the tank (1).

22. Compact flotation unit according to any one of the proceeding claims, wherein the essential cylindrical vertical tank (1) comprises more than one barrier element (20).

23. Compact flotation unit according to any one of the proceeding claims, wherein the essential cylindrical vertical tank (1) below the feed inlet(s) (11,11') comprises a first fluid diverter strip (50) adjacent to a circumference of an inner wall of the tank and arranged to change the flow direction of a fluid film travelling down the inner wall by changing the vertical velocity component to a horizontal velocity component.

24. Compact flotation unit according to any one of the proceeding claims, wherein the essential cylindrical vertical tank below the one or more barrier elements (20) comprises a second fluid diverter strip (52) adjacent to a circumference of the inner wall of the tank (1) and arranged to change the flow direction of a fluid film travelling down the inner wall by changing the vertical velocity component to a horizontal velocity component.

25. Compact flotation unit according to any one of the proceeding claims, wherein the flotation unit comprises at least one feed gas inlet in connection with each feed inlet (11,11'), such that gas is mixed with the feed before the feed enters the cylindrical vertical tank (1) or in the upper compartment (12) of the cylindrical vertical tank (1).

26. Compact flotation unit according to any one of the proceeding claims, wherein the cylindrical vertical tank (1) comprises two tangential feed inlets (11,11') arranged opposite each other at the same axial height.

27. Compact flotation unit according to any one of the proceeding claims, wherein the inlet channel opening (21) is offset a vertical centre axis of the cylindrical vertical tank (1).

## Patentansprüche

1. Kompakte Flotationseinheit zur Abtrennung von Kohlenwasserstoffen aus Wasser, aufweisend einen im Wesentlichen zylindrischen, vertikalen Tank (1) mit einem oberen Raum (12), einem unteren Raum (14) und zumindest einem Sperrelement (20), wobei der Tank (1) in dem oberen Raum (12) zumindest einen tangentialen Zulaufeinlass (11, 11') und einen ersten Ablaufauslass (15) aufweist, wobei der Tank (1) in dem unteren Raum (14) einen zweiten Ablaufauslass (30) und einen Auslass für gereinigtes Fluid (16) aufweist, wobei das zumindest eine Sperrelement (20) einen abwärtsspiralförmigen Kanal (22) mit einer Kanaleinlassöffnung (21) in dem oberen Raum (12) und einer Kanalauslassöffnung (23) in dem unteren Raum (14) aufweist, wobei der abwärtsspiralförmige Kanal (22) eine Fluidverbindung zwischen dem oberen Raum (12) und dem unteren Raum (14) bereitstellt,
**dadurch gekennzeichnet, dass**
der abwärtsspiralförmige Kanal (22) zumindest einen Kanalgaseinlass (26) zum Mischen von Gas in ein Fluid aufweist, das von dem oberen Raum (12) zu dem unteren Raum (14) des Tanks (1) strömt, und wobei der zumindest eine Kanalgaseinlass (26) eingerichtet ist, Gas im Gleichstrom mit einem Fluidstrom einzuspritzen, der den abwärtsspiralförmigen Kanal (22) abwärts durchströmt.

2. Kompakte Flotationseinheit nach Anspruch 1, wobei der abwärtsspiralförmige Kanal (22) der einzige Fluiddurchgang von dem oberen Raum (12) zu dem unteren Raum (14) ist.

3. Kompakte Flotationseinheit nach Anspruch 1, wobei der zumindest eine Kanalgaseinlass (26) einen Körperabschnitt (26c) innerhalb des Kanals (22) aufweist, der die radiale Breite des abwärtsspiralförmigen Kanals (22) überspannt.

4. Kompakte Flotationseinheit nach Anspruch 1 oder 3, wobei der zumindest eine Kanalgaseinlass (26) eine Anordnung von Gasdüsen oder ein langgestreckter Schlitz ist.

5. Kompakte Flotationseinheit nach Anspruch 3, wobei der innenliegende Körperabschnitt (26c) des zumindest einen Kanalgaseinlasses (26) im Wesentlichen rund oder oval geformt ist, so dass ein Fluid, das den spiralförmigen Kanal (22) abwärts durchströmt, sanft in einen Durchgang entlang des zumindest einen Kanalgaseinlasses (26) eingeleitet wird.

6. Kompakte Flotationseinheit nach Anspruch 5, wobei das Verhältnis der maximalen Querschnittsfläche des zumindest einen Kanalgaseinlasses (26) zur Querschnittsfläche des abwärtsspiralförmigen Kanals (22) an der gleichen Stelle zwischen 0,10 und 0,8 oder bevorzugt zwischen 0,20 und 0,6 oder zwischen 0,22 und 0,26 liegt.

7. Kompakte Flotationseinheit nach einem der vorstehenden Ansprüche, wobei der abwärtsspiralförmige Kanal (22) ferner zumindest ein Mischelement (27) aufweist, das stromabwärts des zumindest einen Kanalgaseinlasses (26) angeordnet ist.

8. Kompakte Flotationseinheit nach Anspruch 7, wobei das zumindest eine Mischelement (27) eine gekrümmte stromaufwärtige Oberfläche aufweist.

9. Kompakte Flotationseinheit nach Anspruch 7 oder 8, wobei das zumindest eine Mischelement (27) zumindest eine gewellte Kante aufweist.

10. Kompakte Flotationseinheit nach einem der Ansprüche 7 bis 9, wobei das Verhältnis der maximalen Querschnittsfläche des zumindest einen Mischelements (27) zu der maximalen Querschnittsfläche des zumindest einen Kanalgaseinlasses (26) im Bereich von 0,4 bis 1, bevorzugt im Bereich von 0,5 bis 0,7 und besonders bevorzugt im Bereich von 0,55 bis 0,6 liegt.

11. Kompakte Flotationseinheit nach einem der Ansprüche 7 bis 10, wobei ein Spalt zwischen dem stromaufwärtigen Ende des zumindest einen Mischelements (27) und einem stromabwärtigen Ende des zumindest einen Kanalgaseinlasses (26) vorliegt, wobei der Spalt im Bereich des 0,1- bis 2-fachen der maximalen axialen Höhe des zumindest einen Mischelements (27), bevorzugt im Bereich des 0,4- bis 0,9-fachen der maximalen axialen Höhe des Mischelements (27) und besonders bevorzugt im Bereich des 0,5- bis 0,8-fachen der maximalen axialen Höhe des Mischelements (27) liegt.

12. Kompakte Flotationseinheit nach einem der vorstehenden Ansprüche, wobei der abwärtsspiralförmige Kanal (22) einen oder mehrere weitere Gaseinlässe (26', 26", 26‴) aufweist, die stromabwärts des zumindest einen Kanalgaseinlasses (26) angeordnet und dazu ausgebildet sind, Gas im Gleichstrom mit einem Fluid einzuspritzen, das den abwärtsspiralförmigen Kanal (22) abwärts durchströmt.

13. Kompakte Flotationseinheit nach einem der vorstehenden Ansprüche, wobei der abwärtsspiralförmige Kanal (22) eine Trennplatte und zwei einander gegenüberliegende Auslassöffnungen (23) aufweist.

14. Kompakte Flotationseinheit nach einem der vorstehenden Ansprüche, wobei die radiale Breite des abwärtsspiralförmigen Kanals (22) im Bereich des 0,05-bis 0,3-fachen des Durchmessers des Tanks (1), bevorzugt im Bereich des 0,1- bis 0,2-fachen des Durchmessers des Tanks (1) und besonders bevorzugt im Bereich des 0,14- bis 0,15-fachen des Durchmessers des Tanks (1) liegt.

15. Kompakte Flotationseinheit nach einem der vorstehenden Ansprüche, wobei der abwärtsspiralförmige Kanal (22) einen variablen Neigungswinkel aufweist.

16. Kompakte Flotationseinheit nach Anspruch 14, wobei eine Bodenwand des spiralförmigen Kanals (22) an der Kanalauslassöffnung (23) einen wendelförmigen Neigungswinkel im Bereich von 1 bis 15 Grad, bevorzugt 1 bis 10 Grad und besonders bevorzugt 1,5 bis 4 Grad aufweist.

17. Kompakte Flotationseinheit nach Anspruch 14 oder 15, wobei eine Bodenwand (25) des abwärtsspiralförmigen Kanals (22) an der Kanaleinlassöffnung (21) einen wendelförmigen Neigungswinkel im Bereich von 10 bis 80 Grad, bevorzugt 25 bis 65 Grad, besonders bevorzugt 40 bis 55 Grad, aufweist.

18. Kompakte Flotationseinheit nach einem der vorstehenden Ansprüche, wobei das Sperrelement (20) einen zentralen Zylinder (29) umfasst, der eine Innenwand des abwärtsspiralförmigen Kanals (22) bildet, wobei das obere Ende des zentralen Zylinders (29) durch ein Sicherungselement (31) gesichert ist.

19. Kompakte Flotationseinheit nach Anspruch 18, wobei sich das Sicherungselement (31) oberhalb der Kanaleinlassöffnung (21) nach oben erstreckt.

20. Kompakte Flotationseinheit nach Anspruch 18 oder 19, wobei das untere Ende des zentralen Zylinders (29) durch ein Verschlusselement (35) verschlossen ist, wobei der zweite Ablaufauslass (17) in der Mitte des Verschlusselements (35) angeordnet ist.

21. Kompakte Flotationseinheit nach einem der Ansprüche 18 bis 20, wobei das Sicherungselement (31) eine Öffnung aufweist, die in Fluidverbindung mit einer zweiten Ablaufleitung (30) steht, so dass ein zweiter Ablaufstrom von dem unteren Raum (14) durch den zweiten Ablaufauslass (17), durch den zentralen Zylinder (29) und durch die zweite Ablaufleitung (30) zur Außenseite des Tanks (1) gelangen kann.

22. Kompakte Flotationseinheit nach einem der vorstehenden Ansprüche, wobei der im Wesentlichen zylindrische, vertikale Tank (1) mehr als ein Sperrelement (20) aufweist.

23. Kompakte Flotationseinheit nach einem der vorstehenden Ansprüche, wobei der im Wesentlichen zylindrische, vertikale Tank (1) unterhalb des bzw. der Zulaufeinlässe (11, 11') eine erste Fluidumlenkleiste (50) aufweist, die an einen Umfang einer Innenwand des Tanks angrenzt und dazu ausgebildet ist, die Strömungsrichtung eines Fluidfilms, der an der Innenwand abwärts strömt, zu ändern, indem die vertikale Geschwindigkeitskomponente in eine horizontale Geschwindigkeitskomponente umgewandelt wird.

24. Kompakte Flotationseinheit nach einem der vorstehenden Ansprüche, wobei der im Wesentlichen zylindrische, vertikale Tank unterhalb des einen oder der mehreren Sperrelemente (20) eine zweite Fluidumlenkleiste (52) aufweist, die an einen Umfang der Innenwand des Tanks (1) angrenzt und dazu ausgebildet ist, die Strömungsrichtung eines Fluidfilms, der an der Innenwand abwärts strömt, zu ändern, indem die vertikale Geschwindigkeitskomponente in eine horizontale Geschwindigkeitskomponente umgewandelt wird.

25. Kompakte Flotationseinheit nach einem der vorstehenden Ansprüche, wobei die Flotationseinheit zumindest einen Zulaufgaseinlass in Verbindung mit jedem Zulaufeinlass (11, 11') aufweist, so dass Gas mit dem Zulauf gemischt wird, bevor der Zulauf in den zylindrischen, vertikalen Tank (1) oder in den oberen Raum (12) des zylindrischen, vertikalen Tanks (1) eintritt.

26. Kompakte Flotationseinheit nach einem der vorstehenden Ansprüche, wobei der zylindrische, vertikale Tank (1) zwei tangentiale Zulauföffnungen (11, 11') aufweist, die einander gegenüberliegend auf gleicher axialer Höhe angeordnet sind.

27. Kompakte Flotationseinheit nach einem der vorstehenden Ansprüche, wobei die Kanaleinlassöffnung (21) zu einer vertikalen Mittelachse des zylindrischen, vertikalen Tanks (1) versetzt angeordnet ist.

## Revendications

1. Unité de flottation compacte destinée à séparer des hydrocarbures de l'eau, comprenant un réservoir vertical sensiblement cylindrique (1) avec un compartiment supérieur (12), un compartiment inférieur (14) et au moins un élément formant barrière (20), dans laquelle le réservoir (1) dans le compartiment supérieur (12) comprend au moins une entrée d'alimentation tangentielle (11, 11') et une première sortie de rejet (15), dans laquelle le réservoir (1) dans le compartiment inférieur (14) comprend une deuxième sortie de rejet (30) et une sortie de fluide propre (16), dans laquelle l'au moins un élément formant barrière (20) comprend un canal en forme de spirale vers le bas (22) avec une ouverture d'entrée de canal (21) dans le compartiment supérieur (12), et une ouverture de sortie de canal (23) dans le compartiment inférieur (14), dans laquelle le canal en forme de spirale vers le bas (22) assure une communication fluidique entre le compartiment supérieur (12) et le compartiment inférieur (14), et
**caractérisée en ce que**
le canal en forme de spirale vers le bas (22) comprend au moins une entrée de gaz de canal (26) destinée à mélanger du gaz dans un fluide passant du compartiment supérieur (12) au compartiment inférieur (14) du réservoir (1), et dans laquelle l'au moins une entrée de gaz de canal (26) est agencée de manière à injecter du gaz concomitamment avec un flux de fluide parcourant vers le bas le canal en forme de spirale vers le bas (22).

2. Unité de flottation compacte selon la revendication 1, dans laquelle le canal en forme de spirale vers le bas (22) est le seul passage de fluide du compartiment supérieur (12) au compartiment inférieur (14).

3. Unité de flottation compacte selon la revendication 1, dans laquelle l'au moins une entrée de gaz de canal (26) présente une section de corps (26c) à l'intérieur du canal (22) qui s'étend sur la largeur radiale du canal en forme de spirale vers le bas (22).

4. Unité de flottation compacte selon les revendications 1 ou 3, dans laquelle l'au moins une entrée de gaz de canal (26) est un réseau de buses de gaz ou une fente allongée.

5. Unité de flottation compacte selon la revendication 3, dans laquelle la section de corps intérieure (26c) de l'au moins une entrée de gaz de canal (26) présente une forme sensiblement ronde ou ovale de telle sorte qu'un fluide traversant vers le bas le canal en spirale (22) est guidé en douceur dans un passage le long de l'au moins une entrée de gaz de canal (26).

6. Unité de flottation compacte selon la revendication 5, dans laquelle le rapport de la zone de section transversale maximale de l'au moins une entrée de gaz de canal (26) sur la zone de section transversale du canal en forme de spirale vers le bas (22) sur la même position est compris entre 0,10 et 0,8, ou de préférence entre 0,20 et 0,6, ou entre 0,22 et 0,26.

7. Unité de flottation compacte selon l'une quelconque des revendications précédentes, dans laquelle le canal en forme de spirale vers le bas (22) comprend en outre au moins un élément de mélange (27) agencé en aval de l'au moins une entrée de gaz de canal (26).

8. Unité de flottation compacte selon la revendication 7, dans laquelle l'au moins un élément de mélange (27) comprend une surface en amont incurvée.

9. Unité de flottation compacte selon la revendication 7 ou 8, dans laquelle l'au moins un élément de mélange (27) comprend au moins un bord ondulé.

10. Unité de flottation compacte selon l'une quelconque des revendications 7 à 9, dans laquelle le rapport de la zone de section transversale maximale de l'au moins un élément de mélange (27) sur la zone de section transversale maximale de l'au moins une entrée de gaz de canal (26) se situe dans la plage de 0,4 - 1 de préférence dans la plage de 0,5 - 0,7, et de préférence encore dans la plage de 0,55 - 0,6.

11. Unité de flottation compacte selon l'une quelconque des revendications 7 à 10, dans laquelle il existe un espace entre l'extrémité en amont de l'au moins un élément mélangeur (27) et une extrémité en aval de l'au moins une entrée de gaz de canal (26), dans laquelle ledit espace se situe dans la plage de 0,1 - 2 fois la hauteur axiale maximale de l'au moins un élément mélangeur (27), de préférence dans la plage de 0,4 - 0,9 fois la hauteur axiale maximale de l'élément mélangeur (27), et de préférence encore dans la plage de 0,5 - 0,8 fois la hauteur axiale maximale de l'élément mélangeur (27).

12. Unité de flottation compacte selon l'une quelconque des revendications précédentes, dans laquelle le canal en forme de spirale vers le bas (22) comprend une ou plusieurs entrées de gaz supplémentaires (26', 26", 26‴) agencées en aval de l'au moins une entrée de gaz de canal (26) et agencées pour injecter du gaz concomitamment avec un fluide parcourant vers le bas le canal de forme de spirale vers le bas (22).

13. Unité de flottation compacte selon l'une quelconque des revendications précédentes, dans laquelle le canal en forme de spirale vers le bas (22) comprend une plaque de division et deux ouvertures de sortie (23) agencées à l'opposé l'une de l'autre.

14. Unité de flottation compacte selon l'une quelconque des revendications précédentes, dans laquelle la largeur radiale du canal en forme de spirale vers le bas (22) se situe dans la plage de 0,05 - 0,3 fois le diamètre du réservoir (1), de préférence de 0,1 - 0,2 fois le diamètre du réservoir (1), et de préférence encore de 0,14 - 0,15 fois le diamètre du réservoir (1).

15. Unité de flottation compacte selon l'une quelconque des revendications précédentes, dans laquelle le canal en forme de spirale vers le bas (22) présente un angle de pente variable.

16. Unité de flottation compacte selon la revendication 14, dans laquelle une paroi inférieure du canal en forme de spirale (22) sur l'ouverture de sortie de canal (23) présente un angle de pente hélicoïdal dans la plage de 1 - 15 degrés, de préférence de 1 - 10 degrés, et de préférence encore de 1,5 - 4 degrés.

17. Unité de flottation compacte selon la revendication 14 ou 15, dans laquelle une paroi inférieure (25) du canal en spirale vers le bas (22) sur l'ouverture d'entrée de canal (21) présente un angle de pente hélicoïdal dans la plage de 10 - 80 degrés, de préférence de 25 - 65 degrés, de préférence encore de 40 - 55 degrés.

18. Unité de flottation compacte selon l'une quelconque des revendications précédentes, dans laquelle l'élément formant barrière (20) comprend un cylindre central (29) formant une paroi intérieure du canal en forme de spirale vers le bas (22), dans laquelle l'extrémité supérieure du cylindre central (26) est bloquée par un élément de blocage (31).

19. Unité de flottation compacte selon la revendication 18, dans laquelle l'élément de blocage (31) s'étend vers le haut au-dessus de l'ouverture d'entrée de canal (21).

20. Unité de flottation compacte selon la revendication 18 ou 19, dans laquelle l'extrémité inférieure du cylindre central (29) est fermée par un élément de fermeture (35), dans laquelle la deuxième sortie de rejet (17) est agencée au centre de l'élément de fermeture (35).

21. Unité de flottation compacte selon l'une quelconque des revendications 18 à 20, dans laquelle l'élément de blocage (31) comprend une ouverture en communication fluidique avec un deuxième conduit de rejet (30) de telle sorte qu'un deuxième flux de rejet peut passer du compartiment inférieur (14) par la deuxième sortie de rejet (17), par le cylindre central (29) et par le deuxième conduit de rejet (30) à l'extérieur du réservoir (1).

22. Unité de flottation compacte selon l'une quelconque des revendications précédentes, dans laquelle le réservoir vertical sensiblement cylindrique (1) comprend plus d'un élément formant barrière (20).

23. Unité de flottation compacte selon l'une quelconque des revendications précédentes, dans laquelle le réservoir vertical sensiblement cylindrique (1) sous la/les entrée(s) d'alimentation (11, 11') comprend une première bande de déviation de fluide (50) adjacente à une circonférence d'une paroi intérieure du réservoir et agencée pour changer la direction de flux d'un film fluide descendant la paroi intérieure en changeant la composante de vitesse verticale en une composante de vitesse horizontale.

24. Unité de flottation compacte selon l'une quelconque des revendications précédentes, dans laquelle le réservoir vertical sensiblement cylindrique sous les un ou plusieurs éléments formant barrière (20) comprend une deuxième bande de déviation de fluide (52) adjacente à une circonférence de la paroi intérieure du réservoir (1) et agencée pour changer la direction de flux d'un film de fluide descendant la paroi intérieure en changeant la composante de vitesse verticale en une composante de vitesse horizontale.

25. Unité de flottation compacte selon l'une quelconque des revendications précédentes, dans laquelle l'unité de flottation comprend au moins une entrée de gaz d'alimentation en lien reliée à chaque entrée d'alimentation (11, 11') de telle sorte que du gaz est mélangé à la charge d'alimentation avant que la charge d'alimentation n'entre dans le réservoir vertical cylindrique (1) ou dans le compartiment supérieur (12) du réservoir vertical cylindrique (1).

26. Unité de flottation compacte selon l'une quelconque des revendications précédentes, dans laquelle le réservoir vertical cylindrique (1) comprend deux entrées d'alimentation tangentielles (11, 11') agencées à l'opposé l'une de l'autre sur la même hauteur axiale.

27. Unité de flottation compacte selon l'une quelconque des revendications précédentes, dans laquelle l'ouverture de canal d'entrée (21) est décalée par rapport à un axe central vertical du réservoir vertical cylindrique (1).
